**Europäisches Patentamt**

**European Patent Office**

**Office européen des brevets**

(19)

(11) Veröffentlichungsnummer: **0 321 396 B1**

(12) # EUROPÄISCHE PATENTSCHRIFT

(45) Veröffentlichungstag der Patentschrift:
08.01.92 Patentblatt 92/02

(51) Int. Cl.⁵: **F16B 19/14**

(21) Anmeldenummer: **88810806.5**

(22) Anmeldetag: **24.11.88**

(54) **Nagel mit stauchbarer Hülse.**

(30) Priorität: **18.12.87 DE 3743049**

(43) Veröffentlichungstag der Anmeldung:
**21.06.89 Patentblatt 89/25**

(45) Bekanntmachung des Hinweises auf die
Patenterteilung:
**08.01.92 Patentblatt 92/02**

(84) Benannte Vertragsstaaten:
**BE CH DE FR GB LI NL**

(56) Entgegenhaltungen:
**DE-A- 1 603 703**
**DE-B- 1 181 139**
**DE-B- 1 500 868**

(73) Patentinhaber: **HILTI Aktiengesellschaft**
**FL-9494 Schaan (LI)**

(72) Erfinder: **Buhri, Reinhard**
**Bahnhofstrasse 38**
**A-6820 Frastanz (AT)**
Erfinder: **Hoepker, Elmer Christ**
**Im Bühl 15**
**FL-9494 Planken (LI)**
Erfinder: **Thurner, Elmar**
**Reichstrasse 7a**
**A-6800 Feldkirch (AT)**
Erfinder: **Tobler, Alfred**
**Giessenstrasse 248**
**FL-9491 Ruggell (LI)**

(74) Vertreter: **Wildi, Roland**
**Hilti Aktiengesellschaft Patentabteilung**
**FL-9494 Schaan (LI)**

EP 0 321 396 B1

## Beschreibung

Die Erfindung betrifft ein nagelartiges Befestigungselement, insbesondere zur Verwendung mit mittels Pulverkraft betriebenen Setzgeräten, mit Spitze am eintreibrichtungsseitigen Ende, einem sich entgegen der Eintreibrichtung an die Spitze anschliessenden Schaft und einem sich entgegen der Eintreibrichtung an den Schaft anschliessenden Kopf, wobei sich der Schaft von der Spitze zum Kopf hin konisch erweitert, und wobei der Schaft wenigstens über einen Teil seiner Länge mit einer Randrierung versehen ist (DE-B-1181139).

Nagelartige Befestigungselemente werden mittels pulverkraftbetriebener Setzgeräte in harte Untergründe wie Beton, Stahl und dergleichen eingetrieben. Ein Problem bei dieser Befestigungsart ist der unterschiedliche Eindringwiderstand des Untergrundes.

Durch Verwendung verschiedener Treibladungsstärken sowie durch geräteseitige Massnahmen zur Leistungsregulierung kann die Eintreibleistung des Setzgerätes zwar den örtlichen Verhältnissen einigermassen angepasst werden. Infolge von Inhomogenitäten sowie unterschiedlicher Stärke des Untergrundes kann jedoch die erforderliche Eintreibenergie innerhalb eines Anwendungsbereiches sehr stark variieren.

Um bei unterschiedlicher Eindringtiefe des Befestigungselementes eine sichere Befestigung eines Bauteiles auf dem Untergrund zu erreichen, sind verschiedene Massnahmen bekannt. So wird beispielsweise bei der aus der DE-B-1500868 bekannten Lösung eine Führungshülse mit stirnseitigem Flansch auf dem Schaft des Befestigungselementes angeordnet. Beim Setzvorgang kommt der Flansch an der Oberfläche des zu befestigenden Bauteiles zur Anlage. Beim Eindringen des nagelartigen Befestigungselementes wird die Hülse relativ auf dem Schaft gegen den Kopf verschoben und anschliessend nach Art einer Ziehharmonika mehr oder weniger stark gestaucht. Bei unerwartet hohem Eindringwiderstand ist es bei diesem Befestigungselement jedoch möglich, dass das Befestigungselement nicht so weit eingetrieben wird, dass das rückwärtige Ende der Hülse am Kopf zur Anlage kommt. In diesem Fall ist eine ausreichende Befestigung des Bauteils nicht gewährleistet, da sich die Hülse auf dem Schaft des Befestigungselementes axial verschieben kann.

Der Erfindung liegt die Aufgabe zugrunde, ein nagelartiges Befestigungselement zu schaffen, das bei unterschiedlicher Eindringtiefe in den Untergrund eine sichere Befestigung des zu befestigenden Bauteils ermöglicht.

Gemäss der Erfindung wird dies dadurch Merkmale erreicht, das auf dem Schaft in axialem Abstand vom Kopf eine axial stauchbare Hülse mit Flansch am spitzenseitigen Ende angeordnet ist, wobei der Flansch schirmartig gegen den Kopf mit diesem zugewandter Öffnung gewölbt ist. Der sich von der Spitze zum Kopf hin konisch erweiternde Schaft bewirkt beim Verschieben der Hülse gegen den Kopf eine radiale Aufweitung der Hülse. Somit wird bereits vor dem Auflaufen der Hülse auf den Kopf ein Teil von allfällig vorhandener Ueberenergie in Verformungsarbeit umgewandelt. Durch die Konizität des Schaftes wird ausserdem die Hülse auf dem Schaft in unterschiedlicher Lage gegen Verschieben gesichert. Bei Erreichen der vorgesehenen Eindringtiefe des Befestigungselementes wird die Hülse durch Auflaufen auf den Kopf aufgerollt oder nach Art einer Ziehharmonika axial gestaucht. Der am spitzenseitigen Ende der Hülse angeordnete Flansch kann einerseits der Führung des Befestigungselementes im Setzgerät dienen und bildet andererseits eine relativ grosse Auflagefläche des Befestigungselementes am zu befestigenden Bauteil. Dies ist insbesondere bei der Befestigung von dünnen Blechen von grossem Vorteil, da ein Ueberziehen des Bleches praktisch verhindert wird.

Beim Eintreiben des erfindungsgemässen Befestigungselementes wird das zu befestigende Bauteil durch den Flansch der Hülse gegen den Untergrund gedrückt. Die dabei entstehenden Auflagedrücke können sehr hoch werden. Insbesondere bei der Befestigung dünner Bleche besteht somit die Gefahr des Durchstanzens. Um dies zu vermeiden, ist erfindungsgemäß der Flansch der Hülse schirmartig gegen den Kopf mit diesem zugewandter Oeffnung gewölbt. Durch die Wölbung des Flansches kommen keine scharfen Ränder mit dem zu befestigenden Bauteil in Berührung. Die Wölbung des Flansches schafft auch dann eine gute Auflage, wenn das Befestigungselement etwas abweichend von der senkrechten Lage zur Oberfläche in das zu befestigende Bauteil eingetrieben wird.

Zur Erhöhung des Auszugswertes ist der Schaft wenigstens über einen Teil seiner Länge mit einer Randrierung zu versehen. Die Randrierung erhöht den Haltewert der Hülse auf dem Schaft und den Widerstand beim Verschieben der Hülse auf dem mit einer Randrierung versehenen Schaftbereich.

Der Innendurchmesser am rückwärtigen Ende der Hülse entspricht zweckmässigerweise etwa dem Durchmesser des mittleren Längsabschnittes des Schaftes. Somit kann die Hülse auf den Schaft aufgesteckt und ohne Hilfsmittel mit dem Befestigungselement verbunden werden. Der Innendurchmesser der Hülse kann über deren gesamte Länge gleichbleibend oder am rückwärtigen Ende gegenüber dem übrigen Bereich etwas reduziert werden. Durch einen im Durchmesser reduzierten Bereich am rückwärtigen Ende der Hülse kann eine definierte, begrenzte Anlage der Hülse am Schaft und somit ein relativ genau definierter Verschiebewiderstand erreicht werden.

Beim Setzvorgang stützt sich die Hülse über den Flansch an dem zu befestigenden Bauteil ab, während das Befestigungselement durch die Hülse und das zu befestigende Bauteil hindurch in den Untergrund eingetrieben wird. Durch die Konizität des Schaftes wird dabei eine Kraftkomponente erzeugt, welche das zu befestigende Bauteil gegen den Untergrund presst. Damit dieses Anpressen bereits zu Beginn des Eintreibvorganges erfolgt, ist es zweckmässig, dass die Spitze mit der vorderen Stirnseite des Flansches der Hülse bündig ist. Dadurch wird gleichzeitig mit dem Eindringen des Befestigungselementes in das zu befestigende Bauteil das Bauteil durch die Hülse gegen den Untergrund gepresst. Durch den bündigen Abschluss des Flansches mit der Spitze des Befestigungselementes wird die Spitze geschützt und dadurch Verletzungen des Bedienungspersonals durch das Befestigungselement vermieden.

Beim Aufschieben der Hülse auf den sich zum Kopf hin konisch erweiternden Schaft wird die Hülse radial aufgeweitet. Somit wird ein Teil der Eintreibenergie in Verformungsarbeit umgewandelt. Der ideale Anteil an Verformungsarbeit stellt sich ein, wenn vorteilhafterweise die Konizität des Schaftes 2 bis 15%, vorzugsweise 5 bis 10% beträgt. Dieser Bereich der Konizität entspricht etwa einem Kegelwinkel von etwa 1,5° bis 3°. Eine solche Konizität bewirkt keine Reduktion des Verankerungswertes des Befestigungselementes im Untergrund.

Zweckmässigerweise weist der Schaft wenigstens zwei Bereiche mit unterschiedlicher Konizität auf. Dabei ist die Konizität des entgegen der Eintreibrichtung anschliessenden Bereiches vorzugsweise jeweils grösser. Beim Eintreibvorgang wird somit die Hülse zuerst auf einen Bereich mit geringerer Konizität und anschliessend auf einen Bereich mit grösserer Konizität aufgeschoben. Beim Aufschieben der Hülse auf den Bereich mit grösserer Konizität erfolgt eine relativ starke Verformung der Hülse und somit ein Abbau von allfällig vorhandener Ueberenergie.

Bei Erreichen der vorgesehenen Eindringtiefe wird die Hülse nach Art einer Ziehharmonika relativ stark verformt oder aufgerollt. Damit die Hülse bei dieser Verformung nicht zerstört wird, ist es zweckmässig, dass die Hülse aus Metall besteht. Als Metall kommt insbesondere Stahl in Frage. Daneben können jedoch auch Hülsen aus Leichtmetallegierungen oder Buntmetallen verwendet werden.

Die Erfindung soll nachstehend anhand der sie beispielsweise wiedergebenden Zeichnungen näher erläutert werden. Es zeigen :

Fig. 1     ein erfindungsgemässes Befestigungselement, vor dem Eintreiben,
Fig. 2     das Befestigungselement gemäss Fig. 1, in vollständig eingetriebenem Zustand,
Fig. 3     das Befestigungselement gemäss Fig. 1, in teilweise eingetriebenem Zustand.

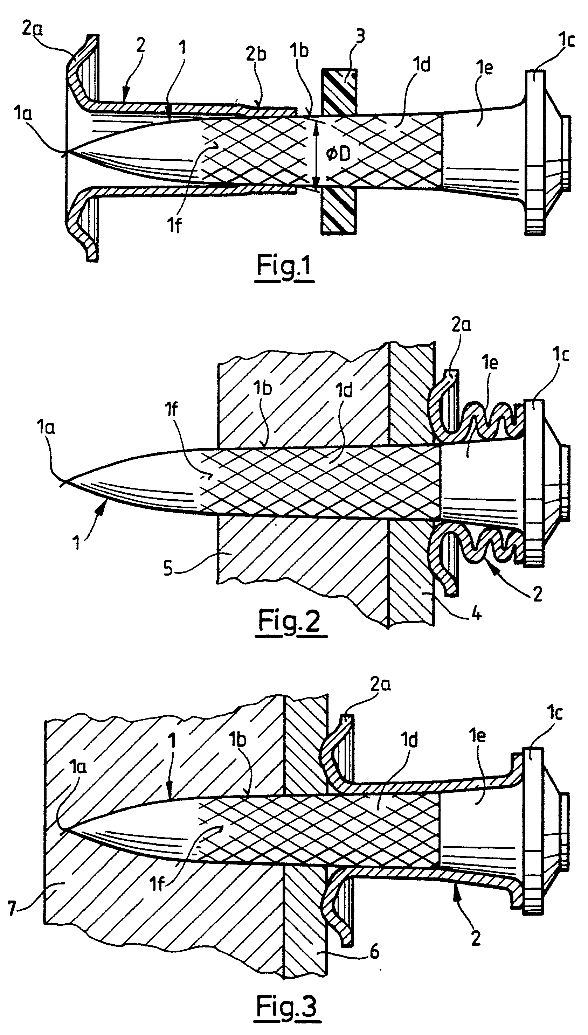

Das aus Fig. 1 bis 3 ersichtliche Befestigungselement besteht im wesentlichen aus einem Nagel 1 mit Spitze 1a, sich an die Spitze 1a anschliessendem Schaft 1b und entgegen der Eintreibrichtung an den Schaft 1b anschliessendem Kopf 1c sowie einer auf den Schaft 1b aufgesteckten Hülse 2. Der Schaft 1b des Nagels 1 erweitert sich von der Spitze 1a zum Kopf 1c hin konisch und ist in zwei Bereiche 1d, 1e von unterschiedlicher Konizität unterteilt. Der vordere Bereich 1d ist mit einer Randrierung 1f versehen. Die Randrierung 1f dient der Erhöhung des Auszugswertes in einem vorzugsweise aus Stahl bestehenden Untergrund. Die Hülse 2 weist an ihrem spitzenseitigen Ende einen Flansch 2a auf. Der Flansch 2a ist schirmartig gegen den Kopf 1c mit diesem zugewandter Oeffnung gewölbt. Diese Ausbildung des Flansches 2a verhindert Durchstanzungen und Beschädigungen eines zu befestigenden Bauteils. Das rückwärtige Ende der Hülse 2 ist mit einer Verjüngung 2b versehen. Der Innendurchmesser D am rückwärtigen Ende der Hülse 2 entspricht etwa dem Durchmesser des mittleren Längsabschnittes des Schaftes 1b des Nagels 1. Im vorderen Bereich 1d des Nagels 1 ist eine der Führung des Befestigungselementes im Lauf eines nicht dargestellten, pulverkraftbetriebenen Setzgerätes dienende Führungsrondelle 3 angeordnet. Die Führungsrondelle 3 besteht vorzugsweise aus Kunststoff und wird beim Eintreibvorgang zerstört. Die Hülse 2 ist so auf dem Nagel 1 angeordnet, dass die vordere Stirnseite des Flansches 2a bündig ist mit der Spitze 1a des Nagels 1.

In Fig. 2 ist das Befestigungselement durch ein zu befestigendes Bauteil 4 hindurch in einen Untergrund 5 eingetrieben. Die Spitze 1a des Nagels 1 durchdringt dabei den Untergrund 5 und überragt diesen auf der dem Bauteil 4 gegenüberliegenden Seite. Beim Eintreibvorgang wird die Hülse 2 relativ zum Nagel 1 auf dem Schaft 1b gegen den Kopf 1c geschoben. Die Hülse 2 wird dabei durch den sich zum Kopf 1c hin konisch erweiternden Schaft 1b zunächst radial aufgeweitet. Beim Auflaufen des rückwärtigen Endes der Hülse 2 am Kopf 1c wird die Hülse nach Art eines Faltenbalges axial zusammengestaucht oder aufgerollt. Der äussere Rand des schirmartig gewölbten Flansches 2a kommt mit dem zu befestigenden Bauteil 4 nicht in Berührung. Somit wird beispielsweise verhindert, dass Oberflächenbeschichtungen des zu befestigenden Bauteils 4 durch das Befestigungselement beschädigt werden. Die sich einerseits am Kopf 1c und andererseits an dem zu befestigenden Bauteil 4 abstützende Hülse 2 ergibt eine gute Abdichtung der Befestigung.

In Fig. 3 ist das Befestigungselement mit geringerer Eintreibenergie oder in einem Untergrund 7 mit höherem Eindringwiderstand gesetzt worden. Der Nagel 1 ist dabei nur teilweise in den Untergrund 7 eingedrungen. Die Hülse 2 presst mit ihrem Flansch 2a das zu befestigende Bauteil 6 gegen den Untergrund 7. Die Hülse 2 ist zwar auf dem Schaft 1b des Nagels 1 verschoben worden, jedoch nur bis zur Anlage ihres rückwärtigen Endes am Kopf 1c. Durch die konische Ausbildung des Schaftes 1b sitzt Hülse 2 fest auf dem Schaft 1b und verhindert ein Lösen des Bauteils 6 vom Untergrund 7. Das erfindungsgemässe Befestigungselement schafft somit eine sichere Befestigung weitgehend unabhängig von der Eindringtiefe des Nagels 1 in den Untergrund 7.

## Patentansprüche

1. Nagelartiges Befestigungselement, insbesondere zur Verwendung mit mittels Pulverkraft betriebenen Setzgeräten mit Spitze (1a) am eintreibrichtungsseitigen Ende, einem sich entgegen der Eintreibrichtung an die Spitze (1a) anschliessenden Schaft (1b) und einem sich entgegen der Eintreibrichtung an den Schaft (1b) anschliessenden Kopf (1c), wobei sich der Schaft (1b) von der Spitze (1a) zum Kopf (1c) hin konisch erweitert, und wobei der Schaft (1b) wenigstens über einen Teil seiner Länge mit einer Randrierung (1f) versehen ist, dadurch gekennzeichnet, dass auf dem Schaft (1b) in axialem Abstand vom Kopf (1c) eine axial stauchbare Hülse (2) mit Flansch (2a) am spitzenseitigen Hülsenende angeordnet ist, wobei der Flansch (2a) schirmartig gegen den Kopf (1c) mit diesem zugewandter Oeffnung gewölbt ist.

2. Befestigungselement nach Anspruch 1, dadurch gekennzeichnet, dass der Innendurchmesser (D) am rückwärtigen Ende der Hülse (2) etwa dem Durchmesser des mittleren Längsabschnittes des Schaftes (1b) entspricht.

3. Befestigungselement nach Anspruch 1 oder 2, dadurch gekennzeichnet, dass die Spitze (1a) bündig ist mit der vorderen Stirnseite des Flansches (2a) der Hülse (2).

4. Befestigunselement nach einem der Ansprüche 1 bis 3, dadurch gekennzeichnet, dass die Konizität des Schaftes (1b) 2 bis 15%, vorzugsweise 5 bis 10% beträgt.

5. Befestigungselement nach einem der Ansprüche 1 bis 4, dadurch gekennzeichnet, dass der Schaft (1b) wenigstens zwei Bereiche (1d, 1e) mit unterschiedlicher Konizität aufweist.

6. Befestigungselement nach einem der Ansprüche 1 bis 5, dadurch gekennzeichnet, dass die Hülse (2) aus Metall besteht.

## Claims

1. A nail-like fastening element, in particular for use with setting tools which are operated by means of explosive force, with a tip (1a) at the driving-in-direction-sided end, a shank (1b) adjoining the tip (1a) contrary to the driving-in direction and a head (1c) adjoining the shank (1b) contrary to the driving-in direction, in which respect the shank (1b) widens conically from the tip (1a) towards the head (1c), and in which respect the shank (1b) is provided with a knurling (1f) at least over a part of its length, charaterised in that arranged on the shank (1b) at an axial spacing from the head (1c) is an axially compressible sleeve (2) having a flange (2a) at the tip-sided sleeve end, in which respect the flange (2) is arched in an umbrella-like manner towards the head (1c) with the opening facing this.

2. A fastening element according to claim 1, characterised in that the inside diameter (D) at the rearward end of the sleeve (2) corresponds approximately to the diameter of the central longitudinal portion of the shank (1b).

3. A fastening element according to claim 1 or 2, characterised in that the tip (1a) is flush with the front end face of the flange (2a) of the sleeve (2).

4. A fastening element according to one of claims 1 to 3, characterised in that the conicity of the shank (1b) amounts to 2 up to 15%, preferably 5 up to 10%.

5. A fastening element according to one of claims 1 to 4, characterised in that the shank (1b) has at least two regions (1d, 1e) having different conicity.

6. A fastening element according to one of claims 1 to 5, characterised in that the sleeve (2) consists of metal.

## Revendications

1. Elément de fixation sous forme de clou, en particulier pour l'utilisation en combinaison avec des appareils de scellement actionnés par l'énergie de la poudre, comprenant une pointe (1a) à l'extrémité orientée dans la direction d'enfoncement, une tige (1b) qui fait suite à la pointe (1a) dans le sens opposé à la direction d'enfoncement et une tête (1c) qui fait suite à la tige (1b) dans le sens opposé à la direction d'enfoncement, la tige (1b) s'élargissant de manière conique de la pointe (1a) vers la tête (1c) et la tige (1b) étant munie au moins sur une partie de sa longueur d'un moletage (1f), **caractérisé en ce** que sur la tige (1b) est disposé, à distance axiale de la tête (1c), un manchon (2) compressible avec une bride (2a) à l'extrémité du manchon située du côté pointe, la bride (2a) étant bombée en parapluie vers la tête (1c), avec ouverture dirigée vers celle-ci.

2. Elément de fixation selon la revendication 1, caractérisé en ce que le diamètre intérieur (D) à l'extrémité postérieure du manchon (2) correspond sensiblement au diamètre de la section longitudinale médiane de la tige (1b).

3. Elément de fixation selon l'une des revendications 1 ou 2, caractérisé en ce que la pointe (1a) est alignée avec la face frontale antérieure de la bride (2a) du manchon (2).

4. Elément de fixation selon l'une des revendications 1 à 3, caractérisé en ce que la conicité de la tige (1b) est de 2 à 15%, de préférence de 5 à 10%.

5. Elément de fixation selon l'une des revendications 1 à 4, caractérisé en ce que la tige (1b) comprend au moins deux sections (1d, 1e) d'une conicité différente.

6. Elément de fixation selon l'une des revendications 1 à 5, caractérisé en ce que le manchon (2) est constitué de métal.

Fig.1

Fig.2

Fig.3